# EUROPÄISCHE PATENTANMELDUNG

(11) **EP 0 769 443 A2**
(43) Veröffentlichungstag der Anmeldung: **23.04.1997**
(21) Anmeldenummer: 96115940.7
(22) Anmeldetag: 04.10.1996
(51) Int. Cl.: B62D 1/10

(54) **Befestigung eines Fahrzeuglenkrades an einer Lenkwelle**

(30) Priorität: 20.10.1995 DE 29516622 U
(71) Anmelder: TRW Occupant Restraint Systems GmbH, 73551 Alfdorf (DE)
(72) Erfinder: Heilig, Alexander, 73550 Wissgoldingen (DE)
(74) Vertreter: Degwert, Hartmut, Dipl.-Phys.

(57) **Zusammenfassung**

Die Erfindung begrifft eine Befestigung eines Lenkrades an einer Lenkwelle (5), mit einer drehfesten Welle/Nabe-Verbindung zwischen einer Nabe des Lenkrades und einem dem Lenkrad zugeordneten Ende der Lenkwelle (5) und mit einem Sperrelement (22; 56), welches eine in der Richtung der Längsachse der Lenkwelle (5) wirksame Formschlußverbindung zwischen der Nabe und der Lenkwelle (5) bildet. Gemäß der Erfindung ist vorgesehen, daß das Sperrelement (22; 56) an der Nabe zwischen einer Sperrstellung, in welcher es in eine Umfangsnut (32) an dem genannten Ende der Lenkwelle (5) eingreift und die Formschlußverbindung ausbildet, und einer Freigabestellung verdrehbar angebracht ist, bei welcher das genannte Ende aus der Nabe herausgezogen werden kann.

## Beschreibung

Die Erfindung betrifft eine Befestigung eines Fahrzeuglenkrades an einer Lenkwelle, mit einer drehfesten Welle/Nabe-Verbindung zwischen einer Nabe des Lenkrades und einem dem Lenkrad zugeordneten Ende der Lenkwelle und mit einem Sperrelement, welches eine in der Richtung der Längsachse der Lenkwelle wirksame Formschlußverbindung zwischen der Nabe und der Lenkwelle bildet.

An eine solche Befestigung werden üblicherweise die folgenden Anforderungen gestellt: Die Befestigung muß das Lenkrad fest und sicher mit der Lenkwelle verbinden, da ein unbeabsichtigtes Lösen dieser Verbindung schwerwiegende Folgen haben könnte. Weiterhin muß die Verbindung lösbar sein, so daß ein Austausch beispielsweise des Lenkrades möglich ist. Schließlich muß eine Justierung der Winkelausrichtung des Lenkrades relativ zur Lenkwelle möglich sein.

Bei der üblichen Befestigung des Lenkrades an der Lenkwelle wird für die drehfeste Welle/Nabe-Verbindung eine Keilwellenverbindung verwendet. Durch Aufstecken der mit einem Keilnabenprofil versehenen Nabe auf das als Keilwellenprofil ausgebildete Ende der Lenkwelle wird eine drehfeste Verbindung zwischen Lenkrad und Lenkwelle erzielt, deren Winkelausrichtung einstellbar ist. Für die Festlegung der Nabe an der Lenkwelle in deren axialer Richtung wird auf einen am genannten Ende der Lenkwelle ausgebildeten Gewindefortsatz von der Innenseite der Nabe aus eine Mutter aufgeschraubt, welche die Nabe mit der Lenkwelle verspannt. Somit ist das Lenkrad fest und sicher an der Lenkwelle befestigt.

Als Folge des in letzter Zeit gestiegenen Sicherheitsbewußtseins kommen vermehrt Gassack-Rückhaltesysteme zum Einsatz, die fahrerseitig im Innenraum der Nabe des Lenkrades angeordnet sind. Im Interesse einer rationellen Montage sollte ein solches Gassack-Rückhaltesystem dem Fahrzeughersteller bereits fertig im Lenkrad montiert geliefert werden. Dies hat aber zur Folge, daß durch die in die Nabe des Lenkrades eingebauten Komponenten des Gassack-Rückhaltesystems ein Zugang zu einem im Innenraum der Nabe angeordneten Sperrelement schwierig oder gar unmöglich ist.

Daher ist es Aufgabe der Erfindung, eine Befestigung der eingangs genannten Art zu schaffen, bei der das Verbinden des Lenkrades mit der Lenkwelle vom Außenraum der Nabe aus erfolgen kann.

Zu diesem Zweck ist bei einer Befestigung der eingangs genannten Art erfindungsgemäß vorgesehen, daß das Sperrelement an der Nabe zwischen einer Sperrstellung, in welcher es in eine Umfangsnut an dem genannten Ende der Lenkwelle eingreift und die Formschlußverbindung ausbildet, und einer Freigabestellung verdrehbar angebracht ist, bei welcher das genannte Ende aus der Nabe herausgezogen werden kann. Durch die Verwendung eines an der Außenseite der Lenkwelle, nämlich in der Umfangsnut, angreifenden Sperrelementes sind die Voraussetzungen für eine Betätigung dieses Sperrelemtentes vom Außenraum der Nabe aus geschaffen, was mit auf das Ende der Lenkwelle aufgeschraubten Sperrelementen nicht möglich ist. Ferner kann die Bewegung des Sperrelementes zwischen der Sperrstellung und der Freigabestellung durch eine einfache Drehbewegung erzielt werden.

Die Erfindung wird nachfolgend unter Bezugnahme auf die beigefügte Zeichnung erläutert. In dieser zeigen:
- Fig. 1 schematisch in einer teilgeschnittenen Seitenansicht die bevorzugte Ausführungsform einer erfindungsgemäße Befestigung eines Lenkrades an einer Lenkwelle; und
- Fig. 2 schematisch die Befestigung von Fig. 1 in einem Querschnitt;

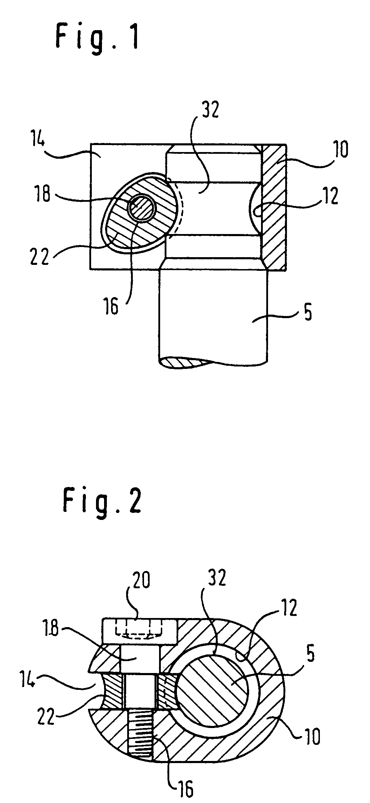

In den Figuren 1 und 2 ist schematisch die bevorzugte Ausführungsform einer erfindungsgemäßen Befestigung eines (nicht dargestellten) Lenkrades an einer Lenkwelle 5 dargestellt. Das Lenkrad weist an seiner (nicht dargestellten) Nabe einen ausschnittsweise dargestellten Fortsatz 10 auf. Die Innenseite der Nabe und somit die dem Fahrer zugewandte Seite des Lenkrades liegt bezüglich Fig. 1 oberhalb des dargestellten Fortsatzes 10. In dem Fortsatz 10 ist eine im wesentlichen zylindrische Öffnung 12 ausgebildet, die an einer Seite einen Schlitz 14 aufweist. Durch die Wandung des Fortsatzes 10 erstreckt sich eine Bohrung 16 so, daß sie den Schlitz 14 durchquert. Die Längsachse der Bohrung 16 ist senkrecht zur Längsachse der Öffnung 12. In der Bohrung 16 ist eine Schraube 18 drehbar aufgenommen, so daß sich ihr Kopf 20 auf der Außenseite des Fortsatzes 10 befindet. Auf dem den Schlitz durchquerenden Abschnitt des Schaftes der Schraube 18 ist drehfest mit dieser ein Nocken 22 angebracht, der bezüglich der Längsachse der Schraube 18 exzentrisch ist. Somit kann der Nocken durch Einwirken auf den Kopf 20 der Schraube 18 um deren Längsachse gedreht werden, und zwar in eine erste Stellung, die Freigabestellung genannt wird und in der der Nocken nicht in den Innenraum des Fortsatzes 10 hineinragt, und in eine zweite Stellung, die Sperrstellung genannt wird und in der der Nocken 22 in den Innenraum des Fortsatzes 10 hineinragt. Das dem Lenkrad zugeordnete Ende der Lenkwelle 5, dessen Außendurchmesser dem Innendurchmesser des Fortsatzes 10 entspricht, ist mit einer Umfangsnut 32 versehen.

Das Lenkrad wird mit der Lenkwelle 5 verbunden, indem das Lenkrad auf das ihm zugeordnete Ende der Lenkwelle aufgesetzt wird, während sich der Nocken 22 in der Freigabestellung befindet. Nachdem die Umfangsnut 32 innerhalb des Fortsatzes 10 angeordnet ist, wird der Nocken 22 gedreht, bis er in die Umfangsnut 32 eingreift. Durch eine geeignete Auswahl der Abmessungen der Umfangsnut 32 und des Nockens 22 sowie durch eine geeignete Anordnung des Nockens 22 relativ zur Umfangsnut 32 kann eine Selbsthemmung des Nockens 22 in der Sperrstellung erzielt werden. Zum Lösen des Nockens 22 wird dieser mittels der Schraube 18 in die Freigabestellung bewegt, und das Lenkrad kann ungehindert von der Lenkwelle 5 abgezogen werden. Der Kopf der Schraube 18 ist leicht von der Außenseite der Nabe aus zugänglich.

Allein durch das Angreifen des Nockens an der Lenkwelle 5 kann eine kraftschlüssige Welle/Nabe-Verbindung erzielt werden, die für die auftretenden Belastungen ausreichend ist. Dennoch kann gemäß einer (nicht dargestellten) Weiterbildung der Erfindung, falls dies zusätzlich gewünscht wird, an der Lenkwelle ein Keilwellenprofil und an dem Fortsatz ein Keilnabenprofil ausgebildet werden, so daß sich auch eine formschlüssige Verbindung zwischen Lenkrad und Lenkwelle ergibt.

Durch die Verwendung einer außerhalb der Nabe angebrachten Überwurfmutter für das Befestigen des Fahrzeuglenkrades an der Lenkwelle ist es nicht erforderlich, daß der Innenraum der Nabe zugänglich ist. Somit ergibt sich die Möglichkeit, in den Innenraum der Nabe des Lenkrades die entsprechenden Komponenten eines Gassack-Rückhaltesystems einzubauen, bevor das Lenkrad mit der Lenkwelle verbunden wird. Gemäß einer (nicht dargestellten) Weiterbildung kann die Lenkwelle hohl sein, so daß ein Gasgenerator in der Lenkwelle angeordnet werden kann, der dann über deren Innenraum mit dem Innenraum der Nabe in Verbindung steht, in der die entsprechenden Komponenten eines Gassack-Rückhaltesystems angeordnet sind.

## Patentansprüche

1. Befestigung eines Lenkrades an einer Lenkwelle (5),
mit einer drehfesten Welle/Nabe-Verbindung zwischen einer Nabe des Lenkrades und einem dem Lenkrad zugeordneten Ende der Lenkwelle (5) und
mit einem Sperrelement (22; 56), welches eine in der Richtung der Längsachse der Lenkwelle (5) wirksame Formschlußverbindung zwischen der Nabe und der Lenkwelle (5) bildet,
dadurch gekennzeichnet, daß das Sperrelement (22; 56) an der Nabe zwischen einer Sperrstellung, in welcher es in eine Umfangsnut (32) an dem genannten Ende der Lenkwelle (5) eingreift und die Formschlußverbindung ausbildet, und einer Freigabestellung verdrehbar angebracht ist, bei welcher das genannte Ende aus der Nabe herausgezogen werden kann.

2. Befestigung nach Anspruch 1, dadurch gekennzeichnet, daß das Sperrelement ein Nocken (22) ist, der um eine zur Längsachse der Lenkwelle (5) senkrechte Achse drehbar gelagert ist.

3. Befestigung nach einem der vorhergehenden Ansprüche, dadurch gekennzeichnet, daß die drehfeste Welle/Nabe-Verbindung durch ein Keilwellenprofil auf der Lenkwelle und durch ein Keilnabenprofil in der Nabe gebildet ist.

4. Befestigung nach einem der Ansprüche 1 und 2, dadurch gekennzeichnet, daß die drehfeste Welle/Nabe-Verbindung durch einen Kegelsitz mit einem an der Lenkwelle ausgebildeten Kegel (7) und einer in der Nabe ausgebildeten kegeligen Aufnahme (50) gebildet ist.
